# EUROPEAN PATENT APPLICATION

(11) **EP 4 704 175 A1**
(43) Date of publication of application: **04.03.2026**
(21) Application number: 25175036.0
(22) Date of filing: 08.05.2025
(51) Int. Cl.: H01M 4/1395, H01M 4/36, H01M 4/46, H01M 4/66, H01M 10/054, H01M 10/0568

(54) **ALUMINUM BATTERY AND MANUFACTURING METHOD THEREOF**

(30) Priority: 30.08.2024 TW 113132804
(71) Applicant: APh ePower Co., Ltd., Kaohsiung City 821 (TW)
(72) Inventor: TSAI, Shih Po Ta, Kaohsiung City 821 (TW); CHEN, Wei-Ting, Kaohsiung City 821 (TW); CHEN, Kuan-Ting, Kaohsiung City 821 (TW); HUNG, Fei-Yi, Kaohsiung City 821 (TW)
(74) Representative: Becker, Eberhard

(57) **Abstract**

An aluminum battery including an electrode structure (100) is provided. The electrode structure (100) includes a substrate (110, 210, 310) and a channel layer (120, 220, 320) located on the substrate (110, 210, 310). A material of the channel layer (120, 220, 320) includes an aluminum chloride. A manufacturing method of an aluminum battery is also provided.

## Description

### BACKGROUND

### Technical Field

The disclosure relates to an aluminum battery and a manufacturing method thereof.

### Description of Related Art

In general, an aluminum battery is composed of a positive electrode, a negative electrode, a separator, and an electrolyte, and the design of these components often significantly affects the performance of the aluminum battery (such as charge and discharge efficiency, etc.).

### SUMMARY

The disclosure provides an aluminum battery and a manufacturing method thereof. The performance of the aluminum battery may be effectively improved.

An aluminum battery of the disclosure includes an electrode structure. The electrode structure includes a substrate and a channel layer located on the substrate. A material of the channel layer includes an aluminum chloride.

In an embodiment of the disclosure, the aluminum battery further includes an electrolyte. The electrode structure is disposed in the electrolyte, and the electrolyte includes an aluminum ion, a chlorine ion, a sodium ion, a nitrogen ion, or a combination thereof.

In an embodiment of the disclosure, a range of a thickness of the channel layer is between 2 micrometers and 20 micrometers.

In an embodiment of the disclosure, the electrode structure further includes an intermediate layer, and the intermediate layer is located between the substrate and the channel layer.

In an embodiment of the disclosure, the channel layer is partially embedded in the intermediate layer.

In an embodiment of the disclosure, the electrode structure is a negative electrode structure, and the intermediate layer includes an aluminum alloy.

In an embodiment of the disclosure, the electrode structure is a positive electrode structure, and the intermediate layer includes an aluminum carbide.

A manufacturing method of an aluminum battery of the disclosure includes a manufacturing of an electrode structure. The manufacturing of the electrode structure includes the following steps. A substrate is provided. A chlorination process is performed to form a channel layer on the substrate. A material of the channel layer includes an aluminum chloride.

In an embodiment of the disclosure, before performing the chlorination process, a spraying process is further performed to form an intermediate layer on the substrate.

In an embodiment of the disclosure, the step of performing the chlorination process includes a step of performing a soaking procedure, and the soaking procedure includes a step of soaking the substrate in a salt water.

Based on the above, the electrode structure of the aluminum battery of the disclosure introduces the channel layer including the aluminum chloride as an ion channel structure, so that other ions may smoothly enter, which helps active substances react more efficiently, thereby effectively improving the performance of the aluminum battery.

To further illustrate the above features and advantages of the disclosure, several embodiments accompanied with drawings are described in detail as follows.

### BRIEF DESCRIPTION OF THE DRAWINGS

FIG. 1A is a schematic diagram of an electrode structure of an aluminum battery according to an embodiment of the disclosure.
FIG. 1B is a schematic diagram of a lattice structure of aluminum chloride.
FIG. 1C is a flowchart of a manufacturing method of an aluminum battery according to an embodiment of the disclosure.
FIG. 1D is a schematic diagram of surface morphology and element analysis of an aluminum foil without performing a soaking procedure.
FIG. 1E is a schematic diagram of surface morphology and element analysis after soaking the aluminum foil in pure water.
FIG. 1F is a schematic diagram of surface morphology and element analysis after soaking the aluminum foil in saturated salt water.
FIGs. 2A to 2C are cross-sectional schematic diagrams of manufacturing a negative electrode structure by a manufacturing method of an aluminum battery according to an embodiment of the disclosure.
FIGs. 3A to 3C are cross-sectional schematic diagrams of a positive electrode structure of an aluminum battery manufacturing method according to an embodiment of the disclosure.

### DESCRIPTION OF THE EMBODIMENTS

In the following detailed description, for the purpose of illustration and not limitation, exemplary embodiments disclosing specific details are described to provide a thorough understanding of various principles of the disclosure. However, it will be evident to a person having ordinary skill in the art that, benefitting from the disclosure, the disclosure may be practiced in other embodiments departing from the specific details disclosed herein.

The exemplary embodiments of the disclosure will be comprehensively described below with reference to the drawings. However, the disclosure may also be implemented in various different forms and should not be construed as limited to the embodiments described herein. In the drawings, for clarity, the sizes and thicknesses of the regions, portions, and layers may not be drawn to actual scale. The same or similar reference numerals denote the same or similar elements, which will not be redundantly described in the following paragraphs.

Directional terms used herein (for example, upper, lower, right, left, front, rear, top, bottom) are used merely for reference to the drawings and are not intended to imply absolute orientation.

Unless otherwise defined, all terms used herein (including technical and scientific terms) have the same meanings as commonly understood by a person having ordinary skill in the art to which the disclosure pertains.

The term "between" used in this specification for defining numerical ranges is intended to cover the range between the endpoints, including the endpoints. For example, a size ranging between a first value and a second value refers to a size range that may cover the first value, the second value, and any value between the first value and the second value.

The aluminum battery in the disclosure includes an electrode structure, a separator, and an electrolyte, wherein the electrode structure and the separator are disposed in the electrolyte, and the electrode structure may be a general term for a positive electrode structure and a negative electrode structure. The disclosure may effectively improve the performance thereof by improving the electrode structure of the aluminum battery, and in some embodiments, the electrode structure may have a synergistic effect with the electrolyte to further optimize the performance of the aluminum battery. The design and manufacturing method of the electrode structure and the electrolyte in the aluminum battery will be described in more detail below using the drawings. The separator may be disposed between the electrode structures using any suitable material and method known to a person having ordinary skill in the art in the technical field (such as fiberglass and nonwoven fabric and the like), and the disclosure is not limited thereto, and thus will not be further described herein.

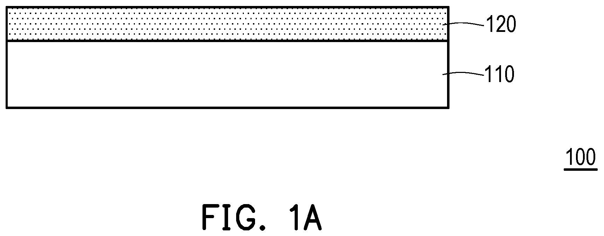

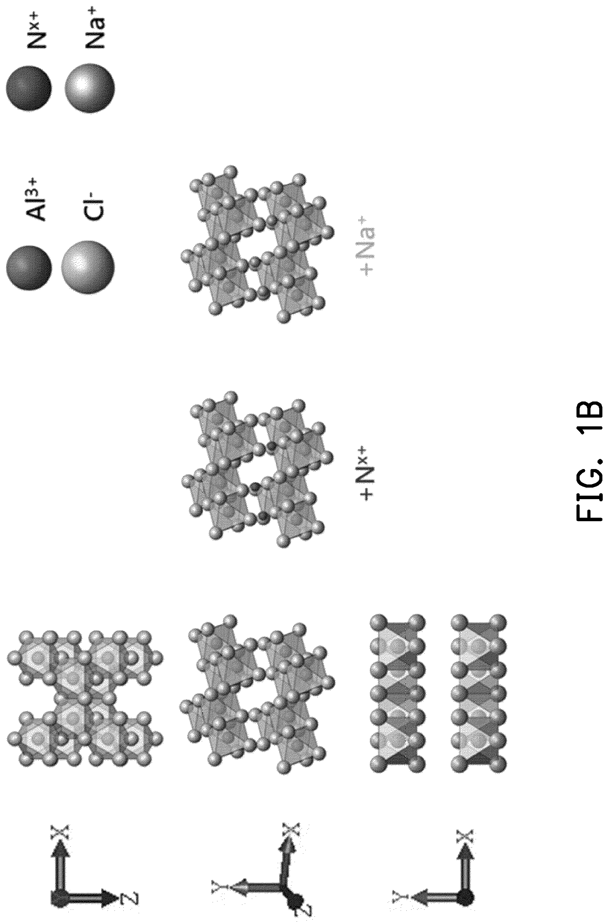

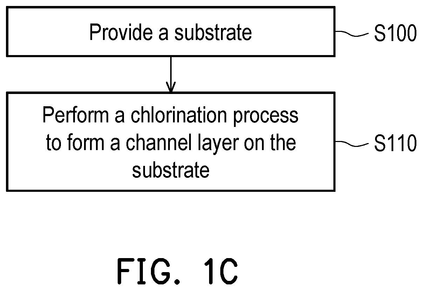

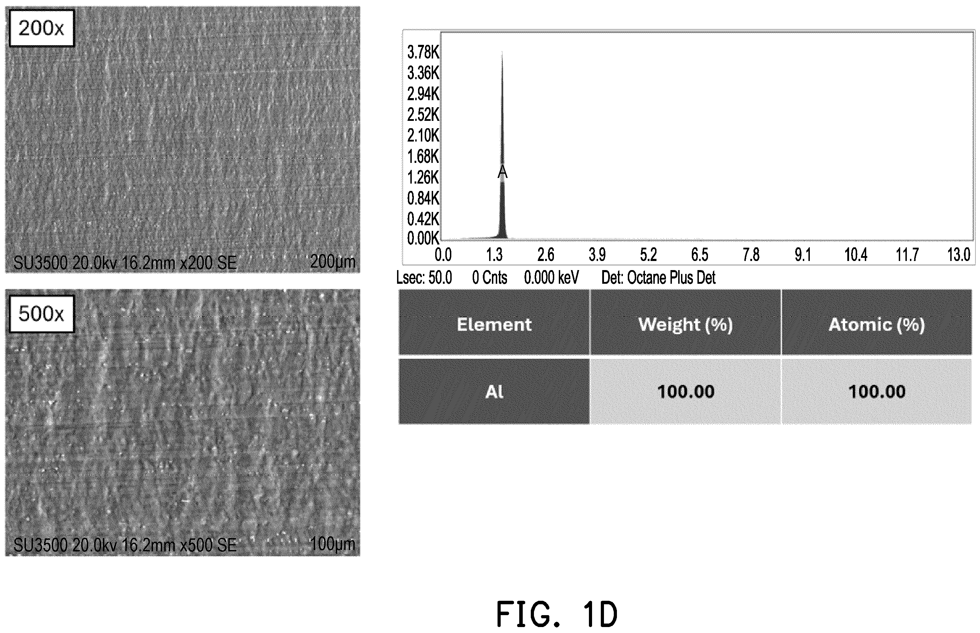

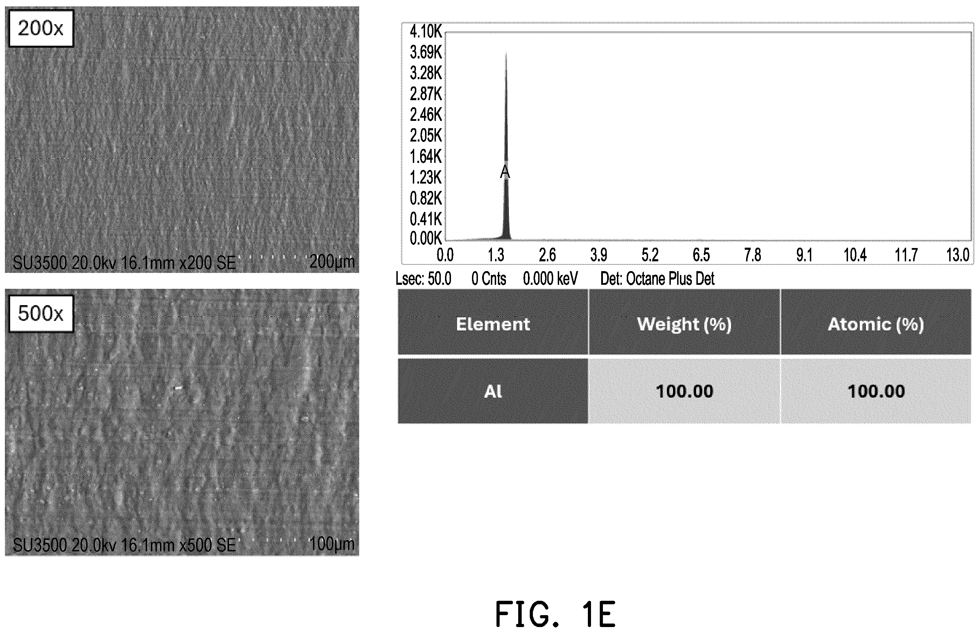

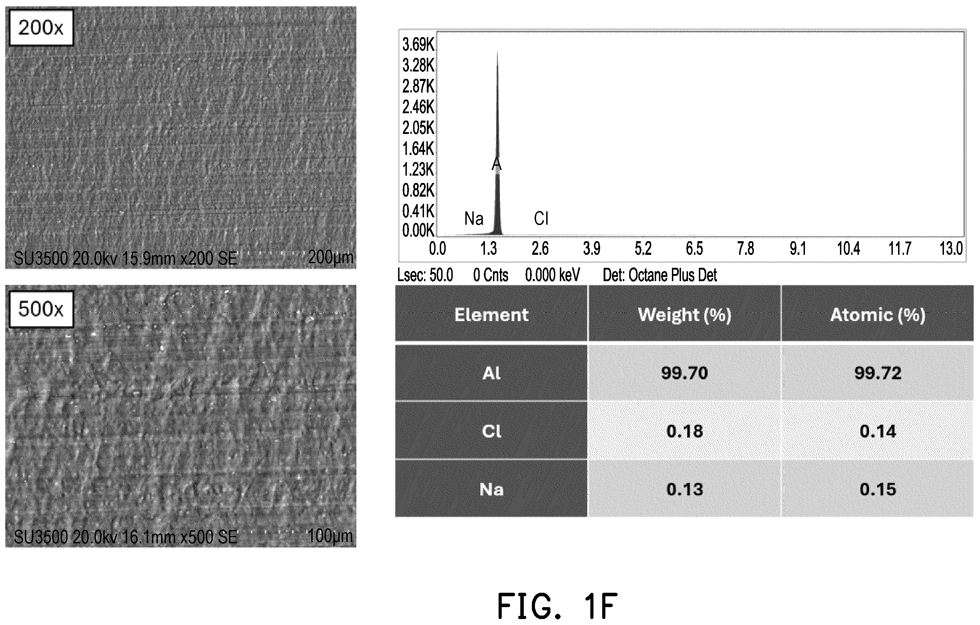

FIG. 1A is a schematic diagram of an electrode structure of an aluminum battery according to an embodiment of the disclosure. FIG. 1B is a schematic diagram of a lattice structure of aluminum chloride. FIG. 1C is a flowchart of a manufacturing method of an aluminum battery according to an embodiment of the disclosure. FIG. 1D is a schematic diagram of surface morphology and element analysis of an aluminum foil without performing a soaking procedure. FIG. 1E is a schematic diagram of surface morphology and element analysis after soaking the aluminum foil in pure water. FIG. 1F is a schematic diagram of surface morphology and element analysis after soaking the aluminum foil in saturated salt water.

Referring to FIG. 1A, an electrode structure 100 of the aluminum battery in this embodiment includes a substrate 110 and a channel layer 120, wherein the channel layer 120 is located on the substrate 110. More specifically, a material of the channel layer 120 includes an aluminum chloride, for example, aluminum trichloride (AlCl₃), which is a compound of chlorine and aluminum. The structure is a cubic close-packed layered structure of Al³⁺, that is, a 6-coordinate layered lattice structure (as shown in FIG. 1B). The gap generated by the interlayer spacing of the lattice structure may serve as an ion channel structure, so that other ions may smoothly enter, which helps active substances react more smoothly, thereby effectively improving the performance of the aluminum battery.

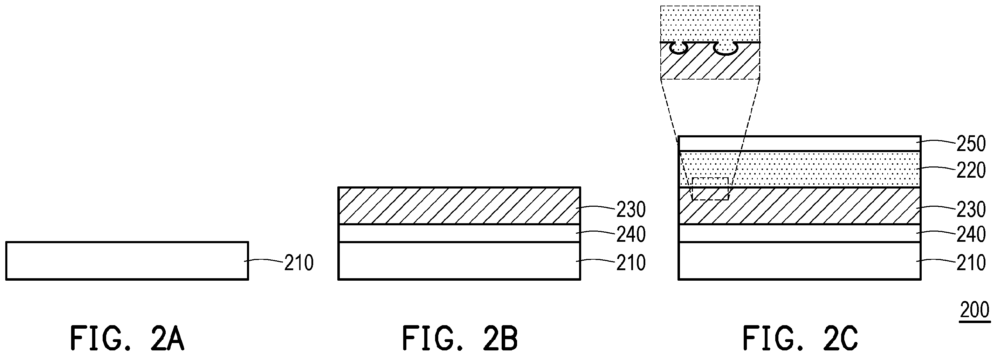

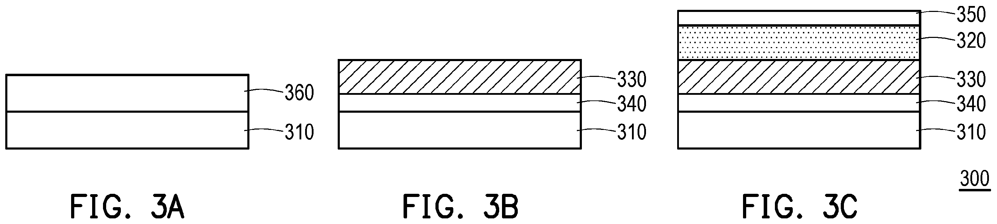

In some embodiments, according to actual design requirements, the electrode structure 100 further includes an intermediate layer, an intermetallic compound layer (IMC), and/or an oxide layer (not shown in FIG. 1A and will be further described in FIGs. 2B to 2C and FIGs. 3B to 3C). For example, one of the three, two of the three, or all three may be present. When all three are present, the intermediate layer is located between the substrate 110 and the channel layer 120, the intermetallic compound layer is located between the substrate 110 and the intermediate layer, and the oxide layer is located on the channel layer 120. However, the disclosure is not limited thereto.

In some embodiments, a range of a thickness of the channel layer 120 is between 2 micrometers and 20 micrometers to provide sufficient space as an ion channel. However, the disclosure is not limited thereto.

On the other hand, the substrate 110 and the intermediate layer may have any suitable thickness, and the disclosure is not limited thereto. The thickness of the intermetallic compound layer and/or the oxide layer is generally so thin as to be negligible. However, there are also cases where the oxide layer has a relatively greater thickness. In such cases, the range of the thickness thereof is, for example, between 0.01 micrometers and 0.1 micrometers. However, the disclosure is not limited thereto.

In this embodiment, the manufacturing method of the aluminum battery may at least include the following steps (the steps of manufacturing the electrode structure 100). Referring to FIG. 1C, first, the substrate 110 is provided (step S100). Next, a chlorination process is performed to form the channel layer 120 on the substrate 110 (step S110), thereby effectively improving the charge and discharge efficiency of the electrode structure 100.

In some embodiments, the step of performing the chlorination process may include performing a soaking procedure, for example, soaking the substrate 110 in salt water (NaCl). In this regard, as shown in FIGs. 1D to 1F, when the substrate 110 (aluminum foil) is soaked in pure water, chlorine elements and sodium elements are not formed on the surface. However, when the substrate 110 (aluminum foil) is soaked in salt water, chlorine elements and sodium elements are formed on the surface. Accordingly, it is confirmed that soaking in salt water may indeed generate a chloride film layer on the substrate 110 (aluminum foil). It should be noted that FIGs. 1D to 1F are not intended to limit the disclosure. That is, it is known to a person having ordinary knowledge in the relevant technical field that similar results will be obtained when performing the soaking test of FIGs. 1D to 1F on different suitable substrate 110 materials or similar structures.

In some embodiments, when the electrode structure 100 manufactured in this way and a suitable electrolyte (for example, a liquid electrolyte composed of aluminum chloride and 1-ethyl-3-methylimidazolium chloride or the like) are assembled into an aluminum battery, ions in the electrolyte including an aluminum ion, a chlorine ion, a sodium ion, a nitrogen ion, or a combination thereof may cause the atomic layer spacing between the channel layer 120 (aluminum chloride) and other layers to be more effectively opened, thereby optimizing the electrical performance of the aluminum battery (such as obtaining a higher electric capacity). However, the disclosure is not limited thereto.

In some embodiments, a concentration range of the salt water is approximately between 0.9% (such as the concentration of normal saline) and 36% (such as the concentration of saturated salt water). However, the disclosure is not limited thereto.

In some embodiments, after the soaking procedure, hydrochloric acid (concentration 1M) may be dropped onto the intermediate layer 120. In this way, the soaking time may be shortened, such as shortening the soaking time by about five times, thereby increasing the manufacturing speed of the electrode structure 100. In the process, the hydrochloric acid must cover the electrode structure 100, and the electrode may be appropriately rinsed with clean water and dried. However, the disclosure is not limited thereto.

In some embodiments, when hydrochloric acid is not used in the subsequent process, the soaking time is at least more than 60 minutes to further ensure the generation of chlorine ions and sodium ions. However, the disclosure is not limited thereto.

In some embodiments, after the soaking procedure, a cleaning step (for example, using pure water) and/or a drying step may be performed. Therefore, in the process of manufacturing the electrode structure 100 in this embodiment, it only needs to go through steps such as soaking in salt water, cleaning, and/or drying. Compared with solutions such as organic solvents, ionic liquids, or electroplating solutions (which contain organic salts), which have greater hazards and are difficult to handle, salt water that does not contain heavy metals, strong acids and alkalis, or organic solvents only needs to be diluted with clean water for discharge, and there is no need to additionally neutralize the acidity or alkalinity or treat it through special waste disposal methods. Furthermore, metals are currently often modified on the surface using electroplating. The toxicity of electroplating solutions will pose a hazard to personnel in the process stage, and the final waste liquid treatment also requires special treatment, such as proper recycling to avoid residual heavy metal substances from harming the environment. Additional energy is also required for the recycling operation during the process. The soaking in salt water process design of this embodiment may eliminate the use of those methods that have high environmental risks while achieving the effect of improving performance. Therefore, this embodiment may conform to the development trend of carbon reduction and green technology.

In some embodiments, before performing the chlorination process, a spraying process is further performed to form an intermediate layer on the substrate 110. Thereby, by performing the spraying process, an electrode that is initially stable and has good charge/discharge and cycle performance may be obtained. However, the disclosure is not limited thereto.

In some embodiments, the aluminum battery does not include a sulfur-containing active substance (non-aluminum-sulfur battery). However, the disclosure is not limited thereto. In this regard, a person having ordinary knowledge in the relevant technical field knows that the operating mechanism of an aluminum-sulfur battery is different from that of a non-aluminum-sulfur battery (such as the disclosure), and thus will not be further described herein.

In some embodiments, the aluminum battery operates at room temperature, that is, the aluminum battery is not a high-temperature battery (such as a battery operating at a temperature greater than 50 °C). However, the disclosure is not limited thereto.

The following will further describe specific aspects of the electrode structure being a negative electrode structure 200 with reference to FIGs. 2A to 2C, wherein the contents of the electrode structure 100 described in FIGs. 1A and 1B may all be applied to the negative electrode structure 200, and some content is omitted here. FIGs. 2A to 2C are cross-sectional schematic diagrams of the negative electrode structure of a manufacturing method of an aluminum battery according to an embodiment of the disclosure.

Referring to FIG. 2A, first, a substrate 210 is provided (corresponding to step S100), wherein the substrate 210 as the negative electrode structure 200 may be a metal foil, for example, made of aluminum (Al), nickel (Ni), copper (Cu), titanium (Ti), or other suitable conductive materials that allow for the attachment of a sprayed coating.

Referring to FIG. 2B, next, in this embodiment, a thermal spray process or a cold spray process may optionally be performed to form an intermediate layer 230 on the substrate 210, wherein a material of the intermediate layer 230 as the negative electrode structure 200 may include an aluminum element and a non-aluminum element. The thermal spray process or cold spray process may be a process and equipment commonly known to a person having ordinary knowledge in the relevant technical field and will not be redundantly described herein.

In some embodiments, the aluminum element accounts for greater than or equal to 85 wt% and less than 100 wt% of the intermediate layer 230, and the non-aluminum element (for example, including silicon (Si), magnesium (Mg), nickel (Ni), copper (Cu), and zinc (Zn)) accounts for less than or equal to 15 wt% and greater than 0 wt% of the alloy layer 230 (therefore, the intermediate layer 230 may be regarded as an aluminum alloy layer).

In some embodiments, when the non-aluminum element includes silicon (Si), magnesium (Mg), nickel (Ni), copper (Cu), zinc (Zn), or a combination thereof, the silicon (Si) content in the intermediate layer 230 is about 0.01 wt% to 12 wt%, the magnesium (Mg) content is about 0.01 wt% to 8 wt%, the nickel (Ni) content is about 0.01 wt% to 8 wt%, the copper (Cu) content is about 0.01 wt% to 8 wt%, and the zinc (Zn) content is about 0.01 wt% to 8 wt%. However, the disclosure is not limited thereto.

In some embodiments, the intermediate layer 230 is an aluminum-nickel alloy (92 wt% aluminum and 8 wt% nickel) or an aluminum-silicon alloy (88 wt% aluminum and 12 wt% silicon), and these aluminum alloys may provide the negative electrode structure 200 with better surface area and corrosion resistance performance while enabling the aluminum battery to have higher stability. However, the disclosure is not limited thereto.

In some embodiments, when the intermediate layer 230 is an aluminum alloy layer and the substrate 210 is an aluminum foil, since the alloy powder contains non-aluminum elements, after performing the spraying process, an aluminum compound layer may be generated. That is, an intermetallic compound layer 240 may be formed between the substrate 210 and the intermediate layer 230. However, the disclosure is not limited thereto.

Referring to FIG. 2C, then, the chlorination process is performed to form a channel layer 220 on the substrate 210 (and the intermediate layer 230) (corresponding to step S110). In this embodiment, through the synergistic effect of the intermediate layer 230 (for example, the spray-coated layer) and the channel layer 220 including aluminum chloride, the performance of the aluminum battery may be more effectively improved. However, the disclosure is not limited thereto. In other embodiments, in the absence of the intermediate layer 230, an electrode structure composed of the substrate 210 and the channel layer 220 including aluminum chloride located thereon may also effectively improve the performance of the aluminum battery. Furthermore, in some embodiments, when the intermediate layer 230 includes an active metal, a dense oxide layer 250 (for example, an aluminum oxide layer) may spontaneously form on the surface of the channel layer 220 when the electrode that is subjected to the chlorination process is placed in an air environment for drying. However, the disclosure is not limited thereto.

In some embodiments, when the electrolyte includes sodium ions and nitrogen ions, the ions may enter the atomic layer spacing of the oxide layer 250 and the channel layer 220 in the negative electrode structure 200, thereby improving the charge and discharge efficiency.

In some embodiments, when the material of the intermediate layer 230 is a porous material, after the soaking procedure, since the salt water penetrates into the pores, a portion of the channel layer 220 is formed in the pores, so that the channel layer 220 is partially embedded in the intermediate layer 230 (as shown in the enlarged portion of FIG. 2C). Under this design, the surface area of the channel layer 220 may be effectively increased. In this way, the subsequent electrical performance may be favorably enhanced. However, the disclosure is not limited thereto.

The following will further describe specific aspects of a positive electrode structure 300 with reference to FIGs. 3A to 3C, wherein the contents of the electrode structure 100 described in FIGs. 1A and 1B may all be applied to the positive electrode structure 300, and some content is omitted here. FIGs. 3A to 3C are cross-sectional schematic diagrams of the positive electrode structure manufactured by a manufacturing method of an aluminum battery according to an embodiment of the disclosure.

Referring to FIG. 3A, first, a substrate 310 is provided (corresponding to step S100), wherein the substrate 310 as the positive electrode structure 300 may be a metal foil, for example, a nickel foil or other suitable material that is conductive and allows for the attachment of a sprayed coating. Next, a carbon material layer 360 is formed on the substrate 310 by coating (as the active substance), wherein a material of the carbon material layer 360 includes a graphite layer or a conductive carbon layer.

Referring to FIG. 3B, next, in this embodiment, a thermal spray process or a cold spray process is performed to form an intermediate layer 330 on the substrate 310, wherein the thermal spray process or the cold spray process may be a process and equipment commonly known to a person having ordinary knowledge in the relevant technical field and will not be redundantly described herein.

In some embodiments, the substrate 310 may be a nickel foil, and the thermal spray process or cold spray process may be spraying a mixed powder composed of pure aluminum powder and graphite powder. In this way, the aluminum powder and graphite powder will form aluminum carbide (Al₄C₃: a compound generated by the reaction of aluminum and carbon during the spraying process) at the spraying temperature (such as above 1000 °C), and an aluminum-nickel intermetallic compound layer 340 may be formed between the substrate 310 and the intermediate layer 330. It should be noted that the aluminum powder described herein is all pure aluminum powder (not aluminum alloy powder), and this will not be redundantly described hereafter.

In some embodiments, when the usage amount of graphite powder exceeds 5 wt%, dispersion problems are more likely to occur, resulting in poor spraying performance. Therefore, the mixing ratio of the mixed powder composed of aluminum powder and graphite powder may be 95 wt% : 5 wt% or a smaller ratio range of graphite powder. However, the disclosure is not limited thereto.

Referring to FIG. 3C, then, the chlorination process is performed to form a channel layer 320 on the substrate 310 (and the intermediate layer 330) (corresponding to step S110). In some embodiments, when the intermediate layer 330 includes an active metal, a dense oxide layer 350 (for example, an aluminum oxide layer) may spontaneously form on the surface of the channel layer 320 when the electrode that is subjected to the chlorination process is placed in an air environment for drying. However, the disclosure is not limited thereto.

In some embodiments, when the electrolyte includes sodium ions and nitrogen ions, the ions may enter the atomic layer spacing of the oxide layer 350 and the channel layer 320 in the positive electrode structure 300 (e.g., AlCl₃ + graphite + aluminum carbide → NaAlCl₄ + NaAl₄C₃), thereby improving the charge and discharge efficiency. For example, in FIG. 3C, the channel layer 320 formed by the chlorination process and including aluminum chloride, the intermediate layer 330 including graphite powder, and the aluminum carbide formed during the spraying process may react with the electrolyte containing sodium ions and nitrogen ions entering the structure, thereby allowing the sodium ions or nitrogen ions to bond with the aluminum chloride and aluminum carbide and maintain the smoothness of the ion channel (the sodium ions or nitrogen ions are located in the atomic layer spacing and support the structure from collapsing). In this way, the charge and discharge performance may be better improved.

In some embodiments, when the material of the intermediate layer 330 is a porous material, after the soaking procedure, since the salt water penetrates into the pores, a portion of the channel layer 320 is formed in the pores, so that the channel layer 320 is partially embedded in the intermediate layer 330 (similar to the embedded portion in FIG. 2C). Under this design, the surface area of the channel layer 320 may be effectively increased. In this way, the subsequent electrical performance may be favorably enhanced. However, the disclosure is not limited thereto.

The following will describe the effects of the disclosure more specifically with reference to the examples and comparative examples. In addition, although the following embodiments are described, details such as the materials used and the processes may be appropriately changed without departing from the scope of the disclosure. Therefore, the disclosure should not be restrictively interpreted based on the embodiments described below.

### Negative Electrode Structures of Example 1 to Example 10

A metal aluminum foil (substrate) having a thickness of 50 micrometers and a size of Φ14 millimeters was used as the negative electrode structure of Example 1. A thermal spray process was used to form an intermediate layer (aluminum alloy layer) on the metal aluminum foil as the negative electrode structures of Example 3, Example 5, Example 7, and Example 9. The thickness of the intermediate layer was 50 micrometers. The aluminum alloy powder used in the thermal spray process was sprayed using high-pressure nitrogen gas at a pressure of 6 kgf/mm², and the duration is 60 seconds. In this case, the aluminum alloy powders used in Example 3, Example 5, Example 7, and Example 9 were respectively aluminum-silicon alloy powders (Al: 96 wt%; Si: 4 wt%), aluminum-silicon alloy powders (Al: 92 wt%; Si: 8 wt%), aluminum-silicon alloy powders (Al: 88 wt%; Si: 12 wt%), and aluminum-silicon alloy powders (Al: 84 wt%; Si: 16 wt%).

In addition, a chlorination process was further performed on the negative electrode structures of Example 1, Example 3, Example 5, Example 7, and Example 9, respectively (by soaking the metal aluminum foil in saturated salt water for 30 minutes), followed by rinsing with pure water to remove the residual salt water and drying in an oven at 60 degrees Celsius for 8 hours, thereby respectively obtaining the negative electrode structures including aluminum chloride negative electrodes of Example 2, Example 4, Example 6, Example 8, and Example 10.

### Negative Electrode Structures of Example 11 to Example 16

The negative electrode structures of Example 11, Example 13, and Example 15 were similar to the negative electrode structures of Example 3, Example 5, and Example 7, with the difference being that the aluminum alloy powders used in Example 11, Example 13, and Example 15 were respectively aluminum-magnesium alloy powders (Al: 96 wt%; Mg: 4 wt%), aluminum-magnesium alloy powders (Al: 92 wt%; Mg: 8 wt%), and aluminum-magnesium alloy powders (Al: 88 wt%; Mg: 12 wt%).

In addition, a chlorination process was further performed on the negative electrode structures of Example 11, Example 13, and Example 15, respectively (by soaking the metal aluminum foil in saturated salt water for 30 minutes), followed by rinsing with pure water to remove the residual salt water and drying in an oven at 60 degrees Celsius for 8 hours, thereby respectively obtaining the negative electrode structures of Example 12, Example 14, and Example 16.

### Negative Electrode Structures of Example 17 to Example 22

The negative electrode structures of Example 17, Example 19, and Example 21 were similar to the negative electrode structures of Example 3, Example 5, and Example 7, with the difference being that the aluminum alloy powders used in Example 17, Example 19, and Example 21 were respectively aluminum-nickel alloy powders (Al: 96 wt%; Ni: 4 wt%), aluminum-nickel alloy powders (Al: 92 wt%; Ni: 8 wt%), and aluminum-nickel alloy powders (Al: 88 wt%; Ni: 12 wt%).

In addition, a chlorination process was further performed on the negative electrode structures of Example 17, Example 19, and Example 21, respectively (by soaking the metal aluminum foil in saturated salt water for 30 minutes), followed by rinsing with pure water to remove the residual salt water and drying in an oven at 60 degrees Celsius for 8 hours, thereby respectively obtaining the negative electrode structures of Example 18, Example 20, and Example 22.

### Negative Electrode Structures of Example 23 to Example 28

The negative electrode structures of Example 23, Example 25, and Example 27 were similar to the negative electrode structures of Example 3, Example 5, and Example 7, with the difference being that the aluminum alloy powders used in Example 23, Example 25, and Example 27 were respectively aluminum-copper alloy powders (Al: 96 wt%; Cu: 4 wt%), aluminum-copper alloy powders (Al: 92 wt%; Cu: 8 wt%), and aluminum-copper alloy powders (Al: 88 wt%; Cu: 12 wt%).

In addition, a chlorination process was further performed on the negative electrode structures of Example 23, Example 25, and Example 27, respectively (by soaking the metal aluminum foil in saturated salt water for 30 minutes), followed by rinsing with pure water to remove the residual salt water and drying in an oven at 60 degrees Celsius for 8 hours, thereby respectively obtaining the negative electrode structures of Example 24, Example 26, and Example 28.

### Negative Electrode Structures of Example 29 to Example 34

The negative electrode structures of Example 29, Example 31, and Example 33 were similar to the negative electrode structures of Example 3, Example 5, and Example 7, with the difference being that the aluminum alloy powders used in Example 29, Example 31, and Example 33 were respectively aluminum-zinc alloy powders (Al: 96 wt%; Zn: 4 wt%), aluminum-zinc alloy powders (Al: 92 wt%; Zn: 8 wt%), and aluminum-zinc alloy powders (Al: 88 wt%; Zn: 12 wt%).

In addition, a chlorination process was further performed on the negative electrode structures of Example 29, Example 31, and Example 33, respectively (by soaking the metal aluminum foil in saturated salt water for 30 minutes), followed by rinsing with pure water to remove the residual salt water and drying in an oven at 60 degrees Celsius for 8 hours, thereby respectively obtaining the negative electrode structures of Example 30, Example 32, and Example 34.

### Aluminum Batteries of Example 1 to Example 34

Graphite slurry (without aluminum powder) was coated on a nickel foil (having a thickness of 0.05 mm and a size of Φ14 mm) to obtain a positive electrode structure. Next, the negative electrode structure (Example 1 to Example 34), the separator (glass fiber filter paper), and the positive electrode structure were arranged in this order and placed into an electrolytic cell containing an electrolyte (the molar ratio of aluminum chloride to 1-ethyl-3-methylimidazolium chloride was 1.3:1), so as to obtain the aluminum batteries of Example 1 to Example 34.

### Positive Electrode Structures of Example 35 to Example 41

A nickel foil (having a thickness of 0.05 mm and a size of Φ14 mm) was coated with graphite slurry (without aluminum powder) as the positive electrode structure of Example 35. A thermal spray process was used on the nickel foil to form an intermediate layer as the positive electrode structures of Example 36, Example 38, and Example 40, wherein the thickness of the intermediate layer was 50 micrometers. A mixed powder of aluminum powder and graphite powder was used in the thermal spray process. The high-pressure gas used was nitrogen. The pressure was 6 kgf/mm², and the duration was 60 seconds. In this case, the mixed powder used in Example 36 was aluminum powder (98 wt%) and graphite powder (2 wt%), the mixed powder used in Example 38 was aluminum powder (95 wt%) and graphite powder (5 wt%), and the mixed powder used in Example 40 was aluminum powder (93 wt%) and graphite powder (7 wt%).

In addition, a chlorination process was further performed on the positive electrode structures of Example 36, Example 38, and Example 40, respectively (by soaking the metal nickel foil in saturated salt water for 30 minutes), followed by rinsing with pure water to remove the residual salt water and drying in an oven at 60 degrees Celsius for 8 hours, thereby respectively obtaining the positive electrode structures of Example 37, Example 39, and Example 41.

### Aluminum Batteries of Example 35 to Example 41

The positive electrode structures of Example 35 to Example 41 were used with the negative electrode structure of Example 6. Next, the negative electrode structure, the separator (glass fiber filter paper), and the positive electrode structure were arranged in this order and placed into an electrolytic cell rich in electrolyte (the molar ratio of aluminum chloride to 1-ethyl-3-methylimidazolium chloride is 1.3:1), so as to obtain the aluminum batteries of Example 35 to Example 41.

### Aluminum Batteries of Example 42 to Example 48

The positive electrode structures of Example 35 to Example 41were used with the negative electrode structure of Example 14. Next, the negative electrode structure, the separator (glass fiber filter paper), and the positive electrode structure were arranged in this order and placed into an electrolytic cell rich in electrolyte (the molar ratio of aluminum chloride to 1-ethyl-3-methylimidazolium chloride is 1.3:1), so as to obtain the aluminum batteries of Example 42 to Example 48.

### Aluminum Batteries of Example 49 to Example 55

The positive electrode structures of Example 35 to Example 41 were used with the negative electrode structure of Example 20. Next, the negative electrode structure, the separator (glass fiber filter paper), and the positive electrode structure were arranged in this order and placed into an electrolytic cell rich in electrolyte (the molar ratio of aluminum chloride to 1-ethyl-3-methylimidazolium chloride is 1.3:1), so as to obtain the aluminum batteries of Example 49 to Example 55.

### Aluminum Batteries of Example 56 to Example 62

The positive electrode structures of Example 35 to Example 41 were used with the negative electrode structure of Example 26. Next, the negative electrode structure, the separator (glass fiber filter paper), and the positive electrode structure were arranged in this order and placed into an electrolytic cell rich in electrolyte (the molar ratio of aluminum chloride to 1-ethyl-3-methylimidazolium chloride is 1.3:1), so as to obtain the aluminum batteries of Example 56 to Example 62.

### Aluminum Batteries of Example 63 to Example 69

The positive electrode structures of Example 35 to Example 41 were used with the negative electrode structure of Example 32. Next, the negative electrode structure, the separator (glass fiber filter paper), and the positive electrode structure were arranged in this order and placed into an electrolytic cell rich in electrolyte (the molar ratio of aluminum chloride to 1-ethyl-3-methylimidazolium chloride is 1.3:1), so as to obtain the aluminum batteries of Example 63 to Example 69.

The aluminum batteries of Example 1 to Example 10 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 1. As seen from Table 1, performing the chlorination process may indeed improve the performance of the aluminum battery.

**Table 1**

| | Negative Electrode Intermediate Layer | Whether Negative Electrode Underwent Chlorination Process | Thickness of Negative Electrode Channel Layer (µm) | mAh/g | CE % | mAh/g | CE% |
|---|---|---|---|---|---|---|---|
| | | | | 1C | 1C | 3C | 3C |
| Example 1 | None | No | 0 | 132 | >70 | 116 | >60 |
| Example 2 | None | Yes | 2~7 | 138 | >75 | 118 | >70 |
| Example 3 | Al: 96 wt%; Si: 4 wt% | No | 0 | 361 | >90 | 355 | >90 |
| Example 4 | Al: 96 wt%; Si: 4 wt% | Yes | 9~12 | 380 | >90 | 369 | >90 |
| Example 5 | Al: 92 wt%; Si: 8 wt% | No | 0 | 428 | >90 | 403 | >90 |
| Example 6 | Al: 92 wt%; Si: 8 wt% | Yes | 12~15 | 438 | >95 | 422 | >90 |
| Example 7 | Al: 88 wt%; Si: 12 wt% | No | 0 | 430 | >90 | 411 | >90 |
| Example 8 | Al: 88 wt%; Si: 12 wt% | Yes | 12~20 | 433 | >95 | 420 | >90 |
| Example 9 | Al: 84 wt%; Si: 16 wt% | No | 0 | 410 | >90 | 393 | >90 |
| Example 10 | Al: 84 wt%; Si: 16 wt% | Yes | 15~20 | 418 | >90 | 399 | >90 |

The aluminum batteries of Example 1 to Example 2 and Example 11 to Example 16 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 2. As seen from Table 2, performing the chlorination process may indeed improve the performance of the aluminum battery.

**Table 2**

| | Negative Electrode Intermediate Layer | Whether Negative Electrode Underwent Chlorination Process | Thickness of Negative Electrode Channel Layer (µm) | mAh/g | CE % | mAh/g | CE% |
|---|---|---|---|---|---|---|---|
| | | | | 1C | 1C | 3C | 3C |
| Example 1 | None | No | 0 | 132 | >70 | 116 | >60 |
| Example 2 | None | Yes | 2~7 | 138 | >75 | 118 | >70 |
| Example 11 | Al: 96 wt%; Mg: 4 wt% | No | 0 | 208 | >90 | 188 | >90 |
| Example 12 | Al: 96 wt%; Mg: 4 wt% | Yes | 15~18 | 212 | >95 | 197 | >90 |
| Example 13 | Al: 92 wt%; Mg: 8 wt% | No | 0 | 256 | >90 | 214 | >90 |
| Example 14 | Al: 92 wt%; Mg: 8 wt% | Yes | 15~20 | 268 | >95 | 228 | >90 |
| Example 15 | Al: 88 wt%; Mg: 12 wt% | No | 0 | 212 | >90 | 198 | >90 |
| Example 16 | Al: 88 wt%; Mg: 12 wt% | Yes | 15~20 | 227 | >90 | 206 | >90 |

The aluminum batteries of Example 1 to Example 2 and Example 17 to Example 22 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 3. As seen from Table 3, performing the chlorination process may indeed improve the performance of the aluminum battery.

**Table 3**

| | Negative Electrode Intermediate Layer | Whether Negative Electrode Underwent Chlorination Process | Thickness of Negative Electrode Channel Layer (µm) | mAh/g | CE % | mAh/g | CE% |
|---|---|---|---|---|---|---|---|
| | | | | 1C | 1C | 3C | 3C |
| Example 1 | None | No | 0 | 132 | >70 | 116 | >60 |
| Example 2 | None | Yes | 2~7 | 138 | >75 | 118 | >70 |
| Example 17 | Al: 96 wt%; Ni: 4 wt% | No | 0 | 308 | >90 | 297 | >90 |
| Example 18 | Al: 96 wt%; Ni: 4 wt% | Yes | 6~10 | 333 | >95 | 306 | >90 |
| Example 19 | Al: 92 wt%; Ni: 8 wt% | No | 0 | 377 | >90 | 370 | >90 |
| Example 20 | Al: 92 wt%; Ni: 8 wt% | Yes | 12~20 | 380 | >95 | 379 | >90 |
| Example 21 | Al: 88 wt%; Ni: 12 wt% | No | 0 | 344 | >90 | 310 | >90 |
| Example 22 | Al: 88 wt%; Ni: 12 wt% | Yes | 15~20 | 348 | >90 | 312 | >90 |

The aluminum batteries of Example 1 to Example 2 and Example 23 to Example 28 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 4. As seen from Table 4, performing the chlorination process may indeed improve the performance of the aluminum battery.

**Table 4**

| | Negative Electrode Intermediate Layer | Whether Negative Electrode Underwent Chlorination Process | Thickness of Negative Electrode Channel Layer (µm) | mAh/g | CE % | mAh/g | CE% |
|---|---|---|---|---|---|---|---|
| | | | | 1C | 1C | 3C | 3C |
| Example 1 | None | No | 0 | 132 | >70 | 116 | >60 |
| Example 2 | None | Yes | 2~5 | 138 | >75 | 118 | >70 |
| Example 23 | Al: 96 wt%; Cu: 4 wt% | No | 0 | 260 | >90 | 228 | >90 |
| Example 24 | Al: 96 wt%; Cu: 4 wt% | Yes | 12~16 | 278 | >95 | 339 | >90 |
| Example 25 | Al: 92 wt%; Cu: 8 wt% | No | 0 | 336 | >90 | 321 | >90 |
| Example 26 | Al: 92 wt%; Cu: 8 wt% | Yes | 15~20 | 349 | >95 | 330 | >90 |
| Example 27 | Al: 88 wt%; Cu: 12 wt% | No | 0 | 323 | >90 | 300 | >90 |
| Example 28 | Al: 88 wt%; Cu: 12 wt% | Yes | 16~22 | 328 | >90 | 307 | >90 |

The aluminum batteries of Example 1 to Example 2 and Example 29 to Example 34 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 5. As seen from Table 5, performing the chlorination process may indeed improve the performance of the aluminum battery.

**Table 5**

| | Negative Electrode Intermediate Layer | Whether Negative Electrode Underwent Chlorination Process | Thickness of Negative Electrode Channel Layer (µm) | mAh/g | CE % | mAh/g | CE% |
|---|---|---|---|---|---|---|---|
| | | | | 1C | 1C | 3C | 3C |
| Example 1 | None | No | 0 | 132 | >70 | 116 | >60 |
| Example 2 | None | Yes | 2~7 | 138 | >75 | 118 | >70 |
| Example 29 | Al: 96 wt%; Zn: 4 wt% | No | 0 | 388 | >90 | 367 | >90 |
| Example 30 | Al: 96 wt%; Zn: 4 wt% | Yes | 6~12 | 400 | >95 | 382 | >90 |
| Example 31 | Al: 92 wt%; Zn: 8 wt% | No | 0 | 462 | >90 | 443 | >90 |
| Example 32 | Al: 92 wt%; Zn: 8 wt% | Yes | 12~20 | 475 | >95 | 458 | >90 |
| Example 33 | Al: 88 wt%; Zn: 12 wt% | No | 0 | 292 | >90 | 266 | >90 |
| Example 34 | Al: 88 wt%; Zn: 12 wt% | Yes | 16~24 | 302 | >90 | 270 | >90 |

The aluminum batteries of Example 35 to Example 41 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 6. As seen from Table 6, performing the chlorination process may indeed improve the performance of the aluminum battery, and the usage amount of graphite powder affects the bonding of aluminum powder and the battery performance.

**Table 6**

| | Positive Electrode Intermediate Layer | Whether Positive Electrode Underwent Chlorination Process | Matched Negative Electrode | Thickness of Positive Electrode Channel Layer (µm) | mAh/g | CE % | mAh/g | CE% |
|---|---|---|---|---|---|---|---|---|
| | | | | | 1C | 1C | 3C | 3C |
| Example 35 | Graphite powder (100 wt%) | No | Example 6 | 0 | 438 | >95 | 422 | >90 |
| Example 36 | Aluminum powder (98 wt%) and graphite powder (2 wt%) | No | Example 6 | 0 | 452 | >95 | 438 | >90 |
| Example 37 | Aluminum powder (98 wt%) and graphite powder (2 wt%) | Yes | Example 6 | 2~6 | 466 | >95 | 450 | >90 |
| Example 38 | Aluminum powder (95 wt%) and graphite powder (5 wt%) | No | Example 6 | 0 | 472 | >95 | 455 | >90 |
| Example 39 | Aluminum powder (95 wt%) and graphite powder (5 wt%) | Yes | Example 6 | 6~10 | 489 | >95 | 475 | >90 |
| Example 40 | Aluminum powder (93 wt%) and graphite powder (7 wt%) | No | Example 6 | 0 | 450 | >90 | 431 | >85 |
| Example 41 | Aluminum powder (93 wt%) and graphite powder (7 wt%) | Yes | Example 6 | 6~10 | 455 | >90 | 438 | >85 |

The aluminum batteries of Example 42 to Example 48 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 7. As seen from Table 7, performing the chlorination process may indeed improve the performance of the aluminum battery, and the usage amount of graphite powder affects the bonding of aluminum powder and the battery performance.

**Table 7**

| | Positive Electrode Intermediate Layer | Whether Positive Electrode Underwent Chlorination Process | Matched Negative Electrode | Thickness of Positive Electrode Channel Layer (µm) | mAh/g | CE % | mAh/g | CE% |
|---|---|---|---|---|---|---|---|---|
| | | | | | 1C | 1C | 3C | 3C |
| Example 42 | Graphite powder (100 wt%) | No | Example 14 | 0 | 268 | >95 | 228 | >90 |
| Example 43 | Aluminum powder (98 wt%) and graphite powder (2 wt%) | No | Example 14 | 0 | 277 | >95 | 233 | >90 |
| Example 44 | Aluminum powder (98 wt%) and graphite powder (2 wt%) | Yes | Example 14 | 2~4 | 289 | >95 | 351 | >90 |
| Example 45 | Aluminum powder (95 wt%) and graphite powder (5 wt%) | No | Example 14 | 0 | 299 | >95 | 364 | >90 |
| Example 46 | Aluminum powder (95 wt%) and graphite powder (5 wt%) | Yes | Example 14 | 6~10 | 312 | >95 | 377 | >90 |
| Example 47 | Aluminum powder (93 wt%) and graphite powder (7 wt%) | No | Example 14 | 0 | 280 | >90 | 239 | >85 |
| Example 48 | Aluminum powder (93 wt%) and graphite powder (7 wt%) | Yes | Example 14 | 6~10 | 300 | >90 | 246 | >85 |

The aluminum batteries of Example 49 to Example 55 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 8. As seen from Table 8, performing the chlorination process may indeed improve the performance of the aluminum battery, and the usage amount of graphite powder affects the bonding of aluminum powder and the battery performance.

**Table 8**

| | Positive Electrode Intermediate Layer | Whether Positive Electrode Underwent Chlorination Process | Matched Negative Electrode | Thickness of Positive Electrode Channel Layer (µm) | mAh/g | CE % | mAh/g | CE% |
|---|---|---|---|---|---|---|---|---|
| | | | | | 1C | 1C | 3C | 3C |
| Example 49 | Graphite powder (100 wt%) | No | Example 20 | 0 | 380 | >95 | 379 | >90 |
| Example 50 | Aluminum powder (98 wt%) and graphite powder (2 wt%) | No | Example 20 | 0 | 394 | >95 | 386 | >90 |
| Example 51 | Aluminum powder (98 wt%) and graphite powder (2 wt%) | Yes | Example 20 | 2~6 | 421 | >95 | 395 | >90 |
| Example 52 | Aluminum powder (95 wt%) and graphite powder (5 wt%) | No | Example 20 | 0 | 430 | >95 | 402 | >90 |
| Example 53 | Aluminum powder (95 wt%) and graphite powder (5 wt%) | Yes | Example 20 | 6~10 | 458 | >95 | 418 | >90 |
| Example 54 | Aluminum powder (93 wt%) and graphite powder (7 wt%) | No | Example 20 | 0 | 419 | >85 | 398 | >75 |
| Example 55 | Aluminum powder (93 wt%) and graphite powder (7 wt%) | Yes | Example 20 | 6~10 | 428 | >85 | 400 | >75 |

The aluminum batteries of Example 56 to Example 62 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 9. As seen from Table 9, performing the chlorination process may indeed improve the performance of the aluminum battery, and the usage amount of graphite powder affects the bonding of aluminum powder and the battery performance.

**Table 9**

| | Positive Electrode Intermediate Layer | Whether Positive Electrode Underwent Chlorination Process | Matched Negative Electrode | Thickness of Positive Electrode Channel Layer (µm) | mAh/g | CE % | mAh/g | CE% |
|---|---|---|---|---|---|---|---|---|
| | | | | | 1C | 1C | 3C | 3C |
| Example 56 | Graphite powder (100 wt%) | No | Example 26 | 0 | 349 | >95 | 330 | >90 |
| Example 57 | Aluminum powder (98 wt%) and graphite powder (2 wt%) | No | Example 26 | 0 | 366 | >95 | 342 | >90 |
| Example 58 | Aluminum powder (98 wt%) and graphite powder (2 wt%) | Yes | Example 26 | 2~5 | 382 | >95 | 357 | >90 |
| Example 59 | Aluminum powder (95 wt%) and graphite powder (5 wt%) | No | Example 26 | 0 | 390 | >95 | 374 | >90 |
| Example 60 | Aluminum powder (95 wt%) and graphite powder (5 wt%) | Yes | Example 26 | 7~10 | 417 | >95 | 386 | >90 |
| Example 61 | Aluminum powder (93 wt%) and graphite powder (7 wt%) | No | Example 26 | 0 | 402 | >90 | 380 | >80 |
| Example 62 | Aluminum powder (93 wt%) and graphite powder (7 wt%) | Yes | Example 26 | 7~10 | 408 | >90 | 387 | >80 |

The aluminum batteries of Example 63 to Example 69 were subjected to charge and discharge testing for 100 cycles at two different C rates (1C and 3C) (differences between slow and fast charge and discharge performance) under the conditions of 12V/10 min/0.05 mAh. The capacities (mAh/g) and charge/discharge Coulombic efficiencies (%) of the two were compared. The differences in reactivity (capacity) and charge/discharge efficiency (CE) may be observed. The results are shown in Table 10. As seen from Table 10, performing the chlorination process may indeed improve the performance of the aluminum battery, and the usage amount of graphite powder affects the bonding of aluminum powder and the battery performance.

**Table 10**

| | Positive Electrode Intermediate Layer | Whether Positive Electrode Underwent Chlorination Process | Matched Negative Electrode | Thickness of Positive Electrode Channel Layer (µm) | mAh/g | CE % | mAh/g | CE% |
|---|---|---|---|---|---|---|---|---|
| | | | | | 1C | 1C | 3C | 3C |
| Example 63 | Graphite powder (100 wt%) | No | Example 32 | 0 | 475 | >95 | 458 | >90 |
| Example 64 | Aluminum powder (98 wt%) and graphite powder (2 wt%) | No | Example 32 | 0 | 506 | >95 | 475 | >90 |
| Example 65 | Aluminum powder (98 wt%) and graphite powder (2 wt%) | Yes | Example 32 | 2~6 | 522 | >95 | 488 | >90 |
| Example 66 | Aluminum powder (95 wt%) and graphite powder (5 wt%) | No | Example 32 | 0 | 541 | >95 | 509 | >90 |
| Example 67 | Aluminum powder (95 wt%) and graphite powder (5 wt%) | Yes | Example 32 | 8~10 | 567 | >95 | 517 | >90 |
| Example 68 | Aluminum powder (93 wt%) and graphite powder (7 wt%) | No | Example 32 | 0 | 569 | >95 | 520 | >90 |
| Example 69 | Aluminum powder (93 wt%) and graphite powder (7 wt%) | Yes | Example 32 | 8~10 | 570 | >95 | 520 | >90 |

In summary, the electrode structure of the disclosure introduces a channel layer including aluminum chloride as an ion channel structure, so that other ions may smoothly enter, which helps active substances react more smoothly, thereby effectively improving the performance of the aluminum battery.

## Claims

1. An aluminum battery, comprising:
an electrode structure (100), comprising:
a substrate (110, 210, 310); and
a channel layer (120, 220, 320), located on the substrate (110, 210, 310), wherein a material of the channel layer (120, 220, 320) comprises an aluminum chloride.

2. The aluminum battery according to claim 1, further comprising an electrolyte, wherein the electrode structure (100) is disposed in the electrolyte, and the electrolyte comprises an aluminum ion, a chlorine ion, a sodium ion, a nitrogen ion, or a combination thereof.

3. The aluminum battery according to claim 1, wherein a range of a thickness of the channel layer (120, 220, 320) is between 2 micrometers and 20 micrometers.

4. The aluminum battery according to claim 1, wherein the electrode structure (100) further comprises an intermediate layer (230, 330), and the intermediate layer (230, 330) is located between the substrate (110, 210, 310) and the channel layer (120, 220, 320).

5. The aluminum battery according to claim 4, wherein the channel layer (120, 220, 320) is partially embedded in the intermediate layer (230, 330).

6. The aluminum battery according to claim 4, wherein the electrode structure (100) is a negative electrode structure (200), and the intermediate layer (230, 330) comprises an aluminum alloy.

7. The aluminum battery according to claim 4, wherein the electrode structure (100) is a positive electrode structure (300), and the intermediate layer (230, 330) comprises an aluminum carbide.

8. A manufacturing method of an aluminum battery, comprising:
manufacturing an electrode structure (100), comprising:
providing a substrate (110, 210, 310); and
performing a chlorination process to form a channel layer (120, 220, 320) on the substrate (110, 210, 310), wherein a material of the channel layer (120, 220, 320) comprises an aluminum chloride.

9. The manufacturing method of the aluminum battery according to claim 8, further comprising, before performing the chlorination process, performing a spraying process to form an intermediate layer (230, 330) on the substrate (110, 210, 310).

10. The manufacturing method of the aluminum battery according to claim 8, wherein performing the chlorination process comprises performing a soaking procedure, and the soaking procedure comprises soaking the substrate (110, 210, 310) in a salt water.
